# EUROPEAN PATENT SPECIFICATION

(11) **EP 0 318 833 B1**
(45) Date of publication and mention of the grant of the patent: **03.11.1993**
(21) Application number: 88119567.1
(22) Date of filing: 24.11.1988
(51) Int. Cl.: C08F 8/24, C08F 12/16

(54) **Novel styrene polymers and process for the production thereof**
Styrolpolymere und Verfahren zur Herstellung davon
Polymères de styrène et leur procédé de préparation

(30) Priority: 04.12.1987 JP 305839/87
(43) Date of publication of application: 07.06.1989
(73) Proprietor: IDEMITSU KOSAN COMPANY LIMITED, Tokyo 100 (JP)
(72) Inventor: Masami, Watanabe, Kimitsu-gun Chiba-ken (JP); Satoshi, Asahi, Kimitsu-gun Chiba-ken (JP)
(74) Representative: Türk, Gille, Hrabal, Leifert

(56) References cited:
- US-A- 3 995 094
- US-A- 4 568 700

## Description

### BACKGROUND OF THE INVENTION

### 1. Field of the Invention

The present invention relates to novel styrene polymers and a process for production thereof, and more particularly to p-halomethylated styrene polymers having syndiotactic configuration which are excellent in various properties such as heat resistance, and a process for efficiently producing p-halomethylated styrene polymers.

### 2. Description of the Related Arts

It has heretofore been known that p-chloromethylated atactic polystyrene can be obtained from atactic polystyrene, i.e., polystyrene having atactic configuration. Various methods for producing p-chloromethylated atactic polystyrene have been known as described in, for example, U.S. Patent Nos. 3,995,094 and 4,568,700, and Japanese Patent Application Laid-Open Nos. 108505/1983, 192705/1986 and 89307/1984.

The p-chloromethylated atactic polystyrene obtained by the above methods, however, has a glass transition temperature (Tg) of 100 to 105°C as described in the Toyo Soda Research Report, Vol. 29, No. 2, pp. 121-127, and thus is unsatisfactory in heat resistance. Thus conventional p-chloromethylated atactic polystyrene is limited in use and unsatisfactory for practical use.

### SUMMARY OF THE INVENTION

An object of the present invention is to provide styrene polymers with improved heat resistance while maintaining their excellent physical properties.

It has now been found that the object can be attained by halomethylating styrene polymers having high syndiotacticity as developed by the present inventors' group (see Japanese Patent Application Laid-Open No. 104818/1987).

The present invention relates to p-halomethylated styrene polymer having a syndiotacticity of at least 30% as measured as the racemic pentad by the ¹³C-NMR method, and further to a process for producing the above p-halomethylated polystyrenes which comprises reacting a styrene polymer having a syndiotacticity of at least 30% as measured as the racemic pentad by the ¹³C-NMR method, with a halomethylating agent in the presence of a solvent and an acid catalyst.

### BRIEF DESCRIPTION OF THE DRAWINGS

Fig. 1 is a ¹³C-NMR spectrum (solvent: CDCl₃) at 50°C of the p-chloromethylated polystyrene having syndiotactic configuration as obtained in Example 1,
Fig. 2 is a ¹³C-NMR spectrum (solvent: CDCl₃) at 50°C of the p-chloromethylated atactic polystyrene used in Comparative Example 1.
Fig. 3 (a) is a ¹³C-NMR spectrum (solvent: CDCl₃) of the copolymer as obtained in Example 8; and
Fig. 3 (b) is a ¹³C-NMR spectrum (solvent: CDCl₃) of the chloromethylated copolymer as obtained in Example 8.

### DESCRIPTION OF PREFERRED EMBODIMENTS

Although p-halomethylated styrene polymer of the present invention can be produced by various other methods, it can be effficiently produced by the process of the present invention. In accordance with the process of the present invention, a styrene polymer, in which the polymer chain is mainly in syndiotactic configuration is used as the starting material. The syndiotactic configuration in the styrene polymer refers to the stereo regularity that phenyl or substituted phenyl groups as side chains are located alternately in the opposite direction relative to the main chain comprising carbon-carbon bonds. The tacticity of the styrene polymer is quantitatively determined by the nuclear magnetic resonance method using carbon isotope (¹³C-NMR method). The tacticity determined by the ¹³C-NMR method is indicated in terms of proportions of the plurality of continuous constitutional units, for example, a diad in which there are two continuous constitutional units, a triad in which there are three continuous constitutional units, and a pentad in which there are five continuous constitutional units. The styrene polymer having mainly syndiotactic configuration as used herein usually means a polystyrene having syndiotacticity in the pentad (racemic pentad) of at least 30% and preferably at least 35%, and further includes a syndiotactic styrene-alkylstyrene copolymer, a syndiotactic styrene-divinylbenzene copolymer containing the divinylbenzene unit in any desired ratio, a cross-linked syndiotactic styrene-divinylbenzene copolymer having a divinylbenzene content of not more than 10 mol%, and so forth.

The molecular weight and molecular weight distribution of the styrene polymer used as the starting material are determined appropriately depending on the purpose of use of the p-halomethylated styrene polymer and characteristics required therefor.

In accordance with the process of the present invention, the above styrene polymer is reacted with a halomethylating agent. This reaction should be carried out in the presence of a solvent and an acid catalyst. Various solvents can be used in the process of the present invention. Usually, solvents such as aromatic solvents and chlorine-containing solvents, which are capable of dissolving or swelling the above styrene polymer used as the starting material, are used. Usually at least one solvent selected from aromatic hydrocarbons, alicyclic hydrocarbons, halogenated hydrocarbons, cyclic amides and cyclic ethers is used.

Aromatic hydrocarbons which can be used as the solvent include benzene, toluene, ethylbenzene, methylnaphthalene, and tetralin. Alicyclic hydrocarbons which can be used include cyclohexane, cyclohexene, methylcyclohexane, ethylcyclohexane, and decahydronaphthalene. Halogenated hydrocarbons which can be used include dichloromethane, chloroform, carbon tetrachloride, dichloroethane, trichloroethane, tetrachloroethane, trifluoroethane, trichlene, chlorobenzene, dichlorobenzene, and trichlorobenzene. Cyclic amides which can be used include N-methylpyrrolidone and N-ethylpyrrolidone. Cyclic ethers which can be used include tetrahydrofuran and dioxane. These solvents can be used alone or as mixtures comprising two or more thereof.

Of these solvents, halogenated hydrocarbons are preferred. Particularly preferred are dichloroethane, chloroform, trichloroethane, tetrachloroethane, trifluoroethane and trichloroethylene. When these solvents are used, not only the reaction proceeds with high efficiency because of no side-reactions to the solvent, but also the reaction can be uniformly carried out under low temperature and mild conditions under which the cross-linking reaction is less likely to occur because of high solubility of the styrene-based polymer in low temperature for these solvents.

Various compounds can be used as the acid catalyst, and it is usually one called Lewis acid. The type of the acid catalyst varies with the type of the halomethylating agent to be used. More specifically, metal halide such as zinc chloride, zinc bromide, zinc iodide, stannic chloride, stannic bromide, stannic iodide, titanium tetrachloride, titanium tetrabromide, titanium tetraiodide, aluminum chloride, aluminum bromide, aluminum iodide, ferric chloride, ferric bromide, and ferric iodide, sulfuric acid, phosphoric acid, trifluoroacetic acid (CF₃COOH), trifluoromethanesulfonic acid (CF₃SO₃H), fluorosulfonic acid (FSO₃H), can be used.

Of these acid catalysts, metal halide is preferred. Particularly in producing chloromethylated styrene polymers, zinc chloride, stannic chloride, titanium tetrachloride and aluminum chloride are preferred.

As the halomethylating agent, various compounds can be used as long as they are able to introduce a halomethyl group in the p-position of the benzene ring of the styrene polymer as the starting material (i.e., in the 4-position of the benzene ring relative to the carbon-carbon bond chain of the styrene polymer). Preferred agents are halogen-containing ether compounds represented by the general formula: ROCH₂X¹ (wherein R is an alkyl group having 1 to 4 carbon atoms, an aryl group having 6 to 20 carbon atoms, or a haloalkyl group having 1 to 20 carbon atoms, and X¹ is a halogen atom), and dihalogenomethylene represented by the general formula: X¹CH₂X² (wherein X¹ and X² are each a halogen atom). Specific examples of the halogen-containing ether compound are chloromethyl methyl ether, chloromethyl ethyl ether, bromomethyl methyl ether, and iodomethyl methyl ether. Specific examples of the dihalogenomethylene are dichloromethylene, dibromomethylene and diiodomethylene.

In the process of the present invention, paraformaldehyde can also be used as the halomethylating agent. Various type of the acid catalyst can be used when a halomethylating agent containing a halogen atom, e.g., a halogen-containing ether compound and dihalogenomethylene, is used. However, it is necessary to use an acid catalyst containing a halogen atom, i.e., metal halide when paraformaldehyde is used. That is, a combination of metal halide and paraformaldehyde is used as the halomethylating agent.

In the process of the present invention, the ratio of the styrene polymer used as the starting material, the acid catalyst and the halomethylating agent is not critical and can be determined appropriately, depending on the desired degree of halomethylation. The amount of the solvent used can be also determined appropriately. Preferably it is determined so that the concentration of the styrene polymer is not more than 40% by weight, with the range of not more than 15% by weight being most preferred. The reaction temperature, pressure and time are also not critical. The reaction temperature is preferably within the range of -30°C to the boiling point of the solvent and most preferably within the range of 0 to 100°C.

If the reaction temperature is in excess of 100°C, the cross-linking reaction markedly proceeds and a cross-linked product is obtained. Thus the desired p-halomethylstyrene chain is less likely to remain and, furthermore, such a markedly cross-linked product is difficult to purify and to mold into a form for practical use.

In accordance with the process of the present invention, a halomethyl group (e.g., a chloromethyl group and a bromomethyl group) is introduced in the p-position of the benzene ring while maintaining the stereo regularity, i.e., syndiotactic configuration of the styrene polymer as the starting material. Thus the p-halomethylated styrene polymer of the present invention is a polymer having a novel structure. The degree of halomethylation in the p-halomethylated styrene polymer is not critical and can be chosen from the wide range of from several percent to almost 100 percent.

In a wide range of several percent to almost 100%, the polymer can be produced with high efficiency and without disturbance of the stereo regularity. When the polymer is used as a photoresist material, it is suitable to control the degree of halomethylation to 5 to 50%.

The molecular weight and molecular weight distribution of the p-halomethylated styrene polymer vary depending on those of the styrene polymer as the starting material. The degree of polymerization is preferably at least 5, and the weight average molecular weight (Mw) is preferably at least 10,000 and most preferably 50,000 to 5,000,000.

The syndiotacticity of the p-halomethylated styrene polymer is correspondent to that of the styrene polymer as the starting material and more specifically is such that the pentad (racemic pentad) is at least 30% and preferably at least 35%.

The p-halomethylated styrene polymer having syndiotactic configuration of the present invention has a glass transition temperature of 110 to 160°C, which is higher than those of the conventional polymers, and thus is greatly improved in heat resistance.

Accordingly the styrene polymer of the present invention is expected to find new applications in functional polymer materials such as negative resists, ion exchange resins, electrically conductive resins, and precursors for polymer catalysts.

The present invention is described in greater detail with reference to the following examples.

### REFERENCE EXAMPLE

### Production of Polystyrene having Syndiotactic Configuration

3.3 L (L=liter) of toluene as a solvent, and 5 mmol of tetraethoxytitanium and 500 mmol (as aluminum atom) of methylaluminoxane as catalyst components were placed in a reactor. 15 L of styrene was added thereto at 40°C, hydrogen was introduced therein until its partial pressure reached 0.5 kg/cm², and the polymerization reaction was carried out for 1.5 hours.

After the polymerization, the product was washed with a mixture of hydrochloric acid and methanol to decompose and remove the catalyst components. Then it was dried to obtain 2.5 kg of a styrene polymer (polystyrene). The polymer was subjected to Soxhlet extraction to obtain 95% by weight of an extraction residue. The weight average molecular weight of the polymer was 98,000. A ¹³C-NMR analysis (solvent 1,2-dichlorobenzene) showed an absorption at 145.35 ppm, ascribable to the syndiotactic configuration. The syndiotacticity in terms of racemi pentad as calculated from the peak area was 96%.

### EXAMPLE 1

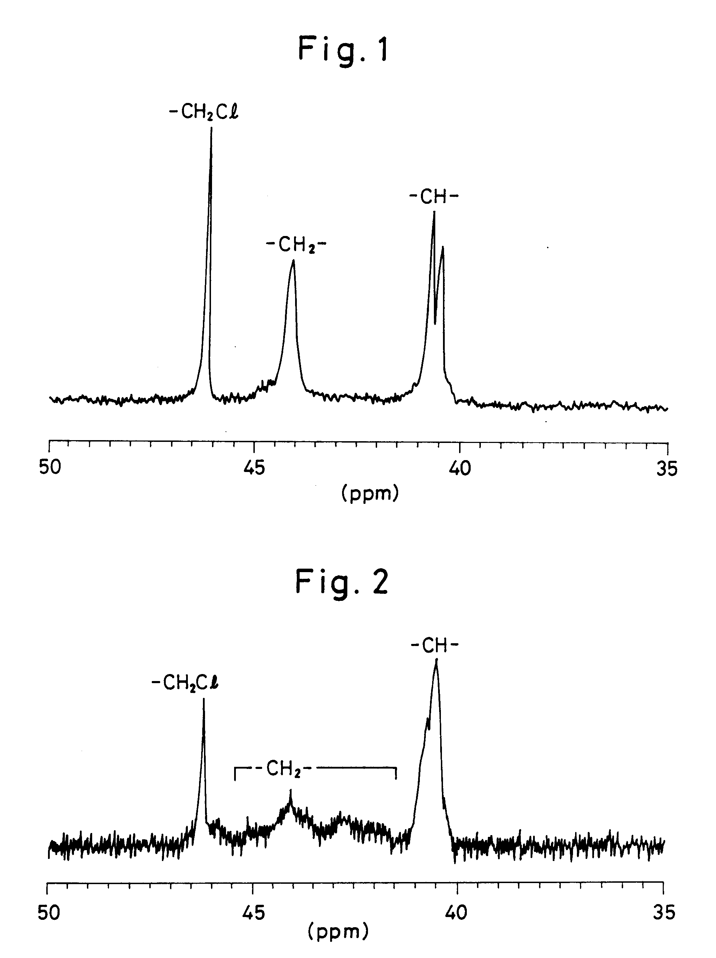

In a 300-milliliter three-necked flask, 100 ml of chloroform as a solvent and 1 g of polystyrene having syndiotactic configuration (SPS) as obtained in the Reference Example were placed, and the mixture was heated and stirred to dissolve SPS in the chloroform. The solution was cooled to room temperature, and 0.76 ml of chloromethyl methyl ether and 1.12 ml of stannic chloride were added in this order. The reaction was carried out at room temperature for 3 hours. After the reaction was completed, the reaction product was introduecd into 1 L of methanol and repricipitated, and then filtered and dried to obtain p-chloromethylated polystyrene having syndiotactic configuration (yield, 90%). A ¹³C-NMR spectrum (solvent: CDCl₃) at 50°C of the polymer is shown in Fig. 1. The degree of chloromethylation as determined by an elemental analysis was 36% (chlorine content, 10.1 wt%), and the glass transition temperature as measured by the use of a differential scanning calorimeter was 140°C.

### EXAMPLE 2

p-Chloromethylated polystyrene having syndiotactic configuration was produced in the same manner as in Example 1 except that the amount of the chloromethyl methyl ether used was changed to 0.08 ml (yield, 85%). The degree of chloromethylation was 4% (chlorine content, 1.4 wt%) and the glass transition temperature was 110°C.

### EXAMPLE 3

p-Chloromethylated polystyrene having syndiotactic configuration was produced in the same manner as in Example 1 except that the reaction time was 6 hours, the amount of the chloromethyl methyl ether used was 1.52 ml and the amount of the stannic chloride used was 2.24 ml (yield, 92%). The degree of chloromethylation was 87% (chlorine content 21.1 wt%).

### EXAMPLE 4

p-Chloromethylated polystyrene having syndiotactic configuration was produced in the same manner as in Example 1 except that the reaction temperature was 61°C and the amount of the chloromethyl methyl ether used was 3.8 ml (yield, 94%). The degree of chloromethylation was 45% (chlorine content 12.2 wt%), and the glass transition temperature was 159°C.

### EXAMPLE 5

p-Chloromethylated polystyrene having syndiotactic configuration was produced in the same manner as in Example 1 except that 0.29 g of paraformaldehyde was used in place of the chloromethyl methyl ether (yield, 98%). The degree of chloromethylation was 4% (chlorine content 1.4 wt%), and the glass transition temperature was 115°C.

### EXAMPLE 6

p-Chloromethylated polystyrene having syndiotactic configuration was produced in the same manner as in Example 1 except that 0.3 g of zinc chloride was used in place of the stannic chloride (yield, 97%). The degree of chloromethylation was 25% (chlorine content 7.6 wt%), and the glass transition temperature was 125°C.

### EXAMPLE 7

A p-chloromethylated syndiotactic styrene-divinylbenzene copolymer was produced in the same manner as in Example 1 except that a syndiotactic styrene-divinylbenzene copolymer (divinylbenzene content: 2 mol%) was used in place of SPS as the starting material (yield, 95%). The degree of chloromethylation was 34% (chlorine content, 9.9 wt%), and the glass transition temperature was 139°C.

### COMPARATIVE EXAMPLE 1

p-Chloromethylated polystyrene having atactic configuration was produced in the same manner as in Example 1 except that atactic polystyrene was used in place of the SPS (yield, 91%). The degree of chloromethylation was 20% (chlorine content, 6.2 wt%). The polymer did not have a glass transition temperature. A ¹³C-NMR (solvent: CDCl₃) spectrum at 50°C of the polymer is shown in Fig. 2.

### EXAMPLE 8

In a reactor were placed 360 ml of toluene as a solvent, 0.15 mmol of tetraethoxytitanium and 15 mmol as aluminum atom of methylaluminoxane, and 1.37 mol of styrene and 0.11 mol of p-methylstyrene were introduced therein and polymerized at 70°C for 2 hours.

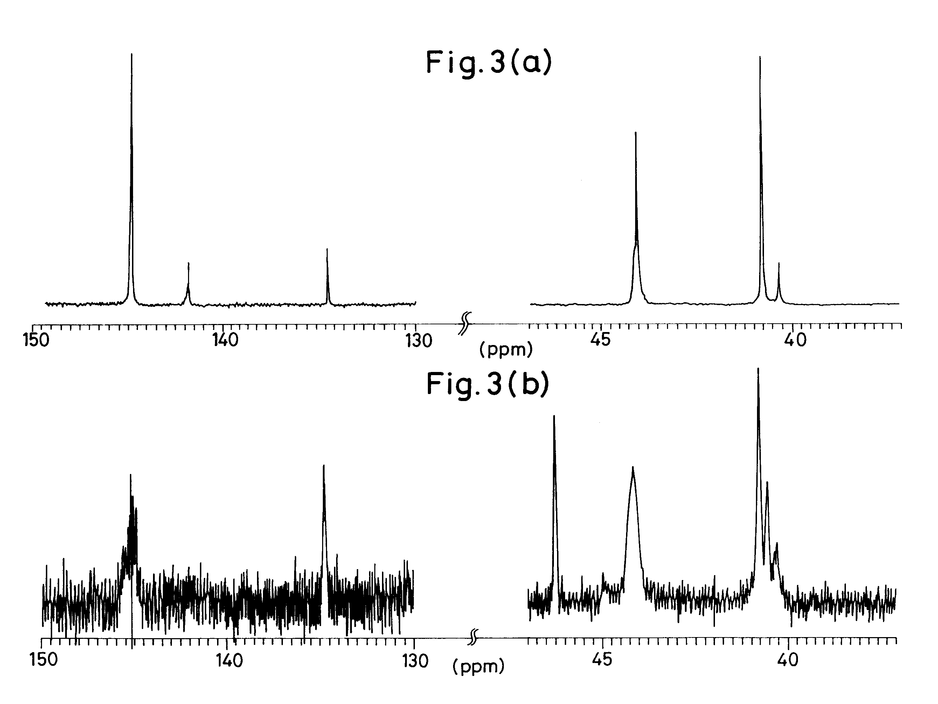

The reaction product was washed with a mixture of hydrochloric acid and methanol to decompose the catalyst components, and then dried to obtain 11 g of a copolymer. This copolymer was subjected to Soxhlet extraction using methyl ethyl ketone as a solvent to obtain an extraction residue of 90%. The copolymer had a weight average molecular weight of 190,000 and a melting point of 230°C. A ¹³C-NMR spectrum of the copolymer is shown in Fig. 3 (a). Signals at 145.11 ppm, 145.2 ppm and 142.09 ppm in the ¹³C-NMR spectrum confirmed that the copolymer had a cosyndiotactic configuration as shown in Japanese Patent Application No. 17973/1987.

The copolymer was subjected to the same chloromethylation reaction as in Example 1. The yield was 85%. A ¹³C-NMR spectrum of the chloromethylated copolymer is shown in Fig. 3 (b). The signal at 46.3 ppm was assigned to a carbon of the chloromethyl group. This confirmed that chloromethylation was achieved without disturbance of the stereoregularity as in the foregoing example. The degree of chloromethylation as determined by an elemental analysis of the chloromethylated copolymer was 25%, and the glass transition temperature as determined by the use of differential scanning calorimeter was 128°C.

### EXAMPLE 9

In the same manner as in Example 8 except that 1.4625 mol of styrene and 0.0375 mol of p-methylstyrene were polymerized at 70°C, 17 g of a styrene-based polymer having cosyndiotactic configuration was obtained. The Soxhlet extraction residue using methyl ethyl ketone as a solvent of the copolymer was 95%. The copolymer had a weight average molecular weight of 180,000 and a melting point of 255°C.

The copolymer was chloromethylated in the same manner as in Example 1 and the chloromethylated product was obtained in a yield of 85%. The degree of chloromethylation in the chloromethylated product was 45%, and the glass transition temperature was 154°C.

## Claims

1. A p-halomethylated styrene polymer having a syndiotacticity of at least 30% as measured as the racemic pentad by the ¹³C-NMR method.

2. The polymer as claimed in Claim 1, which is p-chloromethylated polystyrene.

3. The polymer as claimed in Claim 1, wherein the degree of halomethylation is 5 to 50%.

4. A process for producing a p-halomethylated styrene polymer in which the polymer chain has a syndiotacticity of at least 30% as measured as the racemic pentad by the ¹³C-NMR method, which process comprises reacting a styrene polymer having a syndiotacticity of at least 30% as measured as the racemic pentad by the ¹³C-NMR method, with a halomethylating agent in the presence of a solvent and an acid catalyst.

5. The process as claimed in claim 4, wherein the styrene polymer which is used as a starting material is a polystyrene having a syndiotacticity of at least 30% as measured as the racemic pentad by the ¹³C-NMR method.

6. The process as claimed in Claim 4, wherein the p-halomethylated styrene polymer is p-chloromethylated polystyrene.

7. The process as claimed in Claim 4, wherein the degree of halomethylation is 5 to 50%.

## Patentansprüche

1. p-Halogenmethyliertes Styrolpolymer mit einer Syndiotaktizität von mindestens 30 %, gemessen als racemische Pentade, nach dem ¹³C-NMR-Verfahren.

2. Polymer nach Anspruch 1, bei dem es sich um p-chlormethyliertes Polystyrol handelt.

3. Polymer nach Anspruch 1, bei dem der Halogenmethylierungsgrad 5 bis 50 % beträgt.

4. Verfahren zur Herstellung eines p-halogenmethylierten Styrolpolymers, bei dem die Polymerkette eine Syndiotaktizität von mindestens 30 %, gemessen als racemische Pentade nach dem ¹³C-NMR-Verfahren, aufweist, das umfaßt die Umsetzung eines Styrolpolymers mit einer Syndiotaktizität von mindestens 30 %, gemessen als racemische Pentade nach dem ¹³C-NMR-Verfahren, mit einem Halogenmethylierungsmittel in Gegenwart eines Lösungsmittels und eines Säurekatalysators.

5. Verfahren nach Anspruch 4, bei dem das als Ausgangsmaterial verwendete Styrolpolymer ein Polystyrol mit einer Syndiotaktizität von mindestens 30 %, gemessen als racemische Pentade nach dem ¹³C-NMR-Verfahren, ist.

6. Verfahren nach Anspruch 4, bei dem es sich bei dem p-halogenmethylierten Styrolpolymer um p-chlormethyliertes Polystyrol handelt.

7. Verfahren nach Anspruch 4, bei dem der Halogenmethylierungsgrad 5 bis 50 % beträgt.

## Revendications

1. Polymère de styrène p-halométhylé possédant une syndiotacticité d'au moins 30% mesurée sous forme de pentade racémique par le procédé ¹³C-RMN.

2. Polymère selon la revendication 1, qui est un polystyrène p-chlorométhylé.

3. Polymère selon la revendication 1, dans lequel le degré d'halométhylation est de 5 à 50%.

4. Procédé de production d'un polymère de styrène p-halométhylé dont la chaîne polymère possède une syndiotacticité d'au moins 30% mesurée sous forme de pentade racémique par le procédé ¹³C-RMN, procédé qui consiste à faire réagir un polymère de styrène ayant une syndiotacticité d'au moins 30% mesurée sous forme d'une pentade racémique par le procédé ¹³C-RMN avec un agent d'halométhylation en présence d'un solvant et d'un catalyseur acide.

5. Procédé selon la revendication 4, dans lequel le polymère de styrène qu'on utilise comme matière de départ est un polystyrène ayant une syndiotacticité d'au moins 30% mesurée sous forme de pentade racémique par le procédé ¹³C-RMN.

6. Procédé selon la revendication 4, dans lequel le polymère de styrène p-halométhylé est un polystyrène p-chlorométhylé.

7. Procédé selon la revendication 4, dans lequel le degré d'halométhylation est de 5 à 50%.
